# EUROPÄISCHE PATENTSCHRIFT

(11) **EP 4 424 401 B1**
(45) Veröffentlichungstag und Bekanntmachung des Hinweises auf die Patenterteilung: **08.10.2025**
(21) Anmeldenummer: 23159688.3
(22) Anmeldetag: 02.03.2023
(51) Int. Cl.: B01D 46/00, B01D 46/10, B01D 46/12, B01D 46/58, B01D 46/52

(54) **FILTERANORNUNG MIT FILTER MIT SEGMENTIERTEM KANTENBAND**
FILTER ASSEMBLY WITH FILTER WITH SEGMENTED EDGE BAND
ENSEMBLE FILTRE AVEC FILTRE À BANDE DE BORD SEGMENTÉE

(43) Veröffentlichungstag der Anmeldung: 04.09.2024
(73) Patentinhaber: Carl Freudenberg KG, 69469 Weinheim (DE)
(72) Erfinder: Gärtner, Lukas, 69469 Weinheim (DE); Barnett, Simon, Thornton, LE67 1AW (GB); Felber, Uwe, 69518 Abtsteinach (DE)

(56) Entgegenhaltungen:
- EP-A1- 4 011 480
- DE-A1- 102007 057 616
- DE-A1- 102009 019 859
- DE-A1- 102015 004 336
- DE-A1- 102017 212 383
- DE-A1- 102019 102 104
- DE-A1- 3 834 942
- JP-A- 2005 007 361

## Beschreibung

Die Erfindung betrifft eine Filteranordnung mit einen Filter mit mindestens zwei Faltenbalgen oder Filterelemente mit Faltenbalgen aus plissiertem Filtermedium, wobei die Faltenbalge erste und zweite Seitenflächen aufweisen, wobei die Faltenbalge an ihren Seitenflächen mit Kantenbändern versehen sind.

### Stand der Technik

Aus dem Stand der Technik sind zahlreiche Lösungen zur Fitration von Fluidströmen bekannt. Häufig kommen dabei plissierte Filtermedien zum Einsatz. Die EP 3 332 858 A1 zeigt ein Filterelement mit einem mit Falten versehenen Filtermedium, welches also plissiert ist, und einen Faltenbalg bildet. An seinen seitlichen Flächen ist der Faltenbalg mit einem Kantenband versehen. Das Filterelement kann in einen Rahmen eingesetzt werden, welcher häufig aus Kunststoff hergestellt ist, um eine sichere kraft- bzw. reibschlüssige Abdichtung zwischen Filterelement und Rahmen zu gewährleisten. Alternativ zu einem Rahmen kann auch ein Gehäuse das Filterelement aufnehmen.

Wie in der DE 10 2009 041 113 A1 gezeigt, können von den Kantenbändern Laschen abragen, welche die Abdichtung zum Gehäuse verbessern.

Wie in der DE 10 2019 102 104 A1 können die Endfalten des Faltenbalgs als konvexe, nach außen gewölbte Endfalten ausgebildet sein, welche die Abdichtung zum Gehäuse verbessern.

Die DE 38 34 942 A2 zeigt eine Filtervorrichtung mit einer Vielzahl von Filterelementen und wenigstens einem flexiblen Verbindungselement, das die Filterelemente miteinander verbindet.

### Aufgabenstellung

Aufgabe der vorliegenden Erfindung ist es, eine Filteranordnung zu schaffen, welche ein Gehäuse mit mehreren Kammern und einen passenden Filter zur Filtration verschiedener Luftströme aufweist.

### Technische Lösung

Gelöst wird diese Aufgabe durch eine Filteranordnung mit einem Filtergehäuse mit einer Mehrzahl von Fächern und einen Filter mit einem durchgehenden und mit einem segmentierten Kantenstreifen.

Die Erfindung betrifft eine Filteranordnung mit einem Filter wie nachfolgend beschrieben und mit einem Filtergehäuse zur Aufnahme des Filters. Das Filtergehäuse besitzt eine Mehrzahl von Fächern, wobei jedem Faltenbalg bzw. jedem Filterelement je ein Fach zugeordnet ist und ein jeweiliger Faltenbalg bzw. ein jeweiliges Filterelement in einem jeweiligen Fach aufgenommen ist. Anstelle von Fächern können auch Kammern bzw. Schächte vorgesehen werden. Unabhängig von der Begrifflichkeit und der konkreten geometrischen Ausgestaltung ist Fächern, Kammern und Schächten gemein, dass sie durch Wände oder Stege voneinander getrennt sind. Die sich in den Fächern, Kammern bzw. Schächten befindliche Faltenbalge oder Filterelemente können von unterschiedlichen Luftströmen durchströmt und dabei gereinigt werden. Der Filter wird dabei in vorteilhafter Weise so eingesetzt, dass die Kanten des Filtermediums der Endfalten auf der Anströmseite des Filterelements liegen. Dadurch wird eine besonders gute Abdichtung der Faltenbalge zu den Fächern an den Endfalten erreicht und Leckage vermieden.

Es wurde als vorteilhaft erkannt mehrere Faltenbalge oder mehrere Filterelemente zu einem Filter zusammenzufassen, sodass der Filter ein Bauteil darstellt. Ein solcher Filter kann in einem Arbeitsschritt besonders schnell und einfach in ein aufnehmendes Filtergehäuse montiert werden.

Unter einem Filterelement wird hier ein mit an seinen beiden Seitenflächen versehener Faltenbalg verstanden.

Der Filter dient der Filtration mehrerer Luftströme und wird zur Reinigung der Luftströme von einer Anströmseite zu einer Abströmseite des Filters hin durchströmt. Der Filter weist mindestens zwei Faltenbalge oder mindestens zwei Filterelemente mit je einem Faltenbalg auf, welche von einem plissierten, d.h. mit Falten versehenen Filtermedium gebildet werden. Die Faltenbalge weisen erste und zweite Seitenflächen auf. Bei den Seitenflächen handelt es sich um die sich nicht in Richtung der Faltkanten erstreckenden Seitenflächen des Faltenbalgs, welche durch die zickzack-förmigen Kanten des Filtermediums gebildet werden und somit an den Enden der Faltkanten positioniert sind. Die Faltenbalge sind an ihren ersten Seitenflächen mit einem durchgehenden Band versehen und miteinander verbunden. Werden Filterelemente verwendet, so sind diese an ihrer ersten Seitenfläche zusätzlich mit einem segmentierten Kantenband versehen. Das segmentierte Kantenband ist zwischen Faltenbalg und durchgehendem Band angeordnet. Ein jeweiliges segmentiertes Kantenband ist dabei einem jeweiligen Filterelement und dessen Faltenbalg zugeordnet. An ihren zweiten Seitenflächen sind die Faltenbalge mit einem segmentierten Kantenband versehen. Das segmentierte Kantenband weist dabei so viele Segmente auf, wie Faltenbalge vorhanden sind. An einem jeweiligen Faltenbalg ist an dessen zweiter Seitenfläche also ein Segment des segmentierten Kantenbandes angebracht. An den zweiten Seitenflächen sind die Faltenbalge folglich nicht miteinander verbunden. Mit Ausnahme des durchgehenden Bandes bzw. Kantenbandes ist also auch der Filter als Ganzes segmentiert bzw. unterteilt.

Im Falle der Verwendung von mindestens zwei Faltenbalgen an Stelle von mindestens zwei Filterelementen kann das durchgehende Band als durchgehendes Kantenband ausgeführt sein.

Alternative Begriffe für "Kantenband" sind auch "Seitenstreifen" oder "Kantenstreifen". Das Kantenband ist ein Band bzw. Streifen aus einem flächigen Material.

Solche Kantenbänder dienen zum einen der Stabilisierung der Faltenbalge und des Filterelements. Zum anderen kann durch die Kantenbänder eine Abdichtung der Seitenflächen der Faltenbalge gegenüber angrenzenden Flächen einer Filteraufnahme erreicht werden. Die Kantenbänder können entweder nur an den beiden Seitenflächen angebracht sein. Alternativ können die Kantenbänder auch an den weiteren Flächen im Bereich der Endfalten angebracht sein.

In der ersten Variante werden mehrere Faltenbalge zu einem Filter zusammengefasst. In der zweiten Variante werden mehrere Filterelemente, d.h. mehrere bereits mit Kantenbändern versehene Faltenbalge zu einem Filter zusammengefasst.

In einer konkreten Ausführungsform kann der Filter drei Faltenbalge oder drei Filterelemente aufweisen. Es ist jedoch auch eine größere Anzahl an Faltenbalgen oder Filterelementen denkbar.

Alle Faltenbalge können in vorteilhafter Weise derart ausgestaltet sein, dass jede Endfalte, auch als Faltenauslauf bezeichnet, d.h. ein letzter Faltabschnitt, konvex nach außen gewölbt ist, d.h., es liegt eine Wölbung an der Stirnseite des Faltenbalgs vor. Es wurde überraschend festgestellt, dass bei einer derartigen Ausgestaltung des Filters ein hoher Anpressdruck auf die konvex nach außen gewölbte Endfalten bei Anliegen eines Volumenstroms an dem Filter bewirkt wird. Wird der erfindungsgemäße Filter in eine Filteraufnahme eingesetzt, beispielsweise in einen Filterrahmen oder in ein Filtergehäuse, und kommen die konvex nach außen gewölbten Endfalten zur Anlage an einer Wand der Filteraufnahme, so wird aufgrund des hohen Anpressdrucks eine gute Abdichtwirkung erzielt und Bypässe im Bereich der konvex nach außen gewölbten Endfalten können vermieden oder zumindest stark reduziert werden.

**In** besonders vorteilhafter Weiterbildung des Filters sind die Kanten des Filtermediums aller Endfalten, welche sich parallel zu den Faltkanten erstrecken, alle zu einer Seite des Filterelements hin orientiert, also entweder zur Anströmseite oder zur Abströmseite. Bevorzugt ist die Orientierung hin zur Anströmseite, da dann die zuvor beschriebene leckagearme bzw. leckagefreie Anlage der konvexen Endfalten ermöglicht wird.

**In** vorteilhafter Ausgestaltung ist am durchgehenden Band und/oder am segmentierten Kantenband mindestens eine Lasche angebracht ist. Die Lasche kann als Dichtungslasche ausgebildet sein und / oder als Auszugslasche.

Die Dichtungslasche kann am durchgehenden Band und/oder am segmentierten Kantenband angebracht sein und eine bessere Abdichtung zum Gehäuse bewirken. Die Auszugslasche kann am durchgehenden Band angebracht sein und ein einfacheres Ergreifen und Demontieren des Filters ermöglichen.

Die mindestens eine Lasche kann aus demselben Material sein, wie auch das Band oder das Kantenband. Auch eine einteilige Ausgestaltung der Lasche mit dem Band bzw. Kantenband ist denkbar. Diese Varianten sind aus fertigungstechnischer Hinsicht besonders vorteilhaft.

Besonders vorteilhaft ist es, wenn der Faltenbalg aus Vliesstoff gebildet wird, da Vliesstoff ein leichtes Material mit guten Filter- und Fertigungseigenschaften darstellt. Auch das durchgehende Band und die Kantenbänder können aus einem Vliesstoff gefertigt sein.

Um das durchgehende Band an den Filterelementen und die Kantenbänder an den Faltenbalgen zu befestigen, können diese miteinander verklebt sein, beispielsweise mit einem Hotmeltklebstoff.

In vorteilhafter Ausgestaltung sind die Faltenbalge in montiertem Zustand beabstandet zueinander, d.h. die Endfalten liegen nicht flächig aneinander an sondern es gibt einen Spalt zwischen je zwei aneinander angrenzenden Baltenbalgen und deren Segmenten des segmentierten Kantenbandes. Es handelt sich dabei um einen Spalt kleiner Breite, insbesondere im Bereiche 0,1 bis 10 Millimeter. In diesen Spalt greifen Wände bzw. Stege von Fächern, Kammern bzw. Schächten des Filtergehäuses ein.

Die erfindungsgemäße Filteranordnung kann insbesondere als Innenraum-Luftfilter in Fahrzeugen, wie z.B. Autos, PKW, NKW, Bussen, Zügen oder Schiffen oder deren Klimaanlagen verwendet werden.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

### Ausführungsbeispiel

Die Erfindung soll anhand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1: einen Filter gemäß dem Stand der Technik
- Fig. 2a: einen Filter in einer ersten Ansicht
- Fig. 2b: einen Filter in einer zweiten Ansicht
- Fig. 3: eine Filteranordnung in einer grobschematischen Schnittdarstellung
- Fig. 4a: eine Variante mit drei Filterelementen
- Fig. 4b: eine Variante mit drei Faltenbalgen

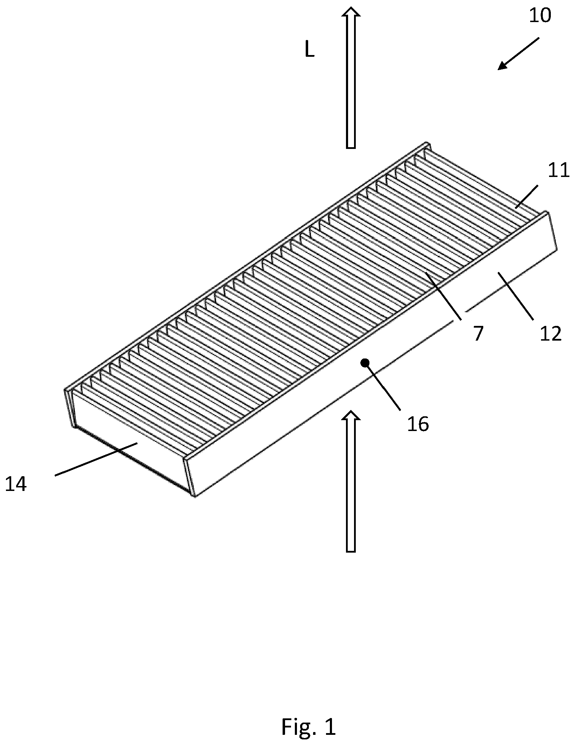

Fig. 1 zeigt einen Filter 10 mit einem Faltenbalg 11 gemäß dem Stand der Technik. Der Faltenbalg 11 wird durch ein mit Falten versehenes, plissiertes Filtermedium 7 gebildet und besitzt zwei Endfalten 14. Durch das Vorsehen der Vielzahl von Falten kann die Filtrationsfläche des Filters 10 vergrößert werden. An seinen beiden sich nicht in Richtung der Falten erstreckenden Seitenflächen 16 ist der Filter 10 mit jeweils einem Kantenband 12 versehen. Ein solcher Filter 10 kann in ein hier nicht dargestelltes Gehäuse 9 eingesetzt werden. Zur Reinigung eines Fluids strömt dieses in Durchströmungsrichtung L durch das Filtermedium 7 des Filters 10.

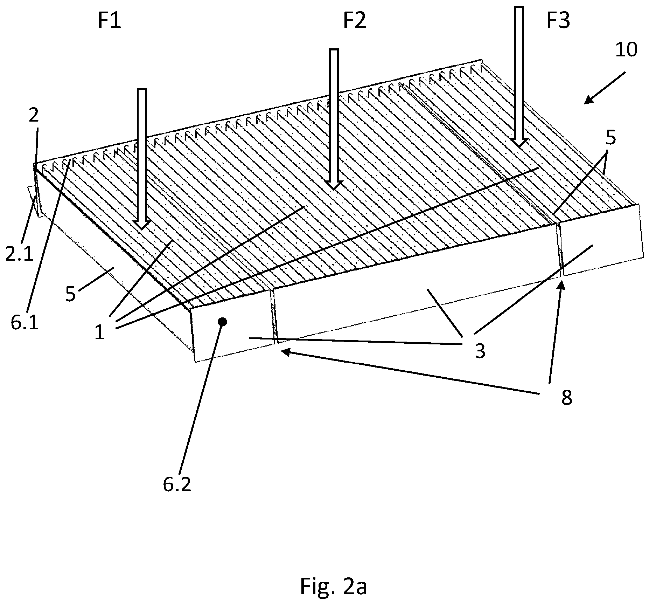

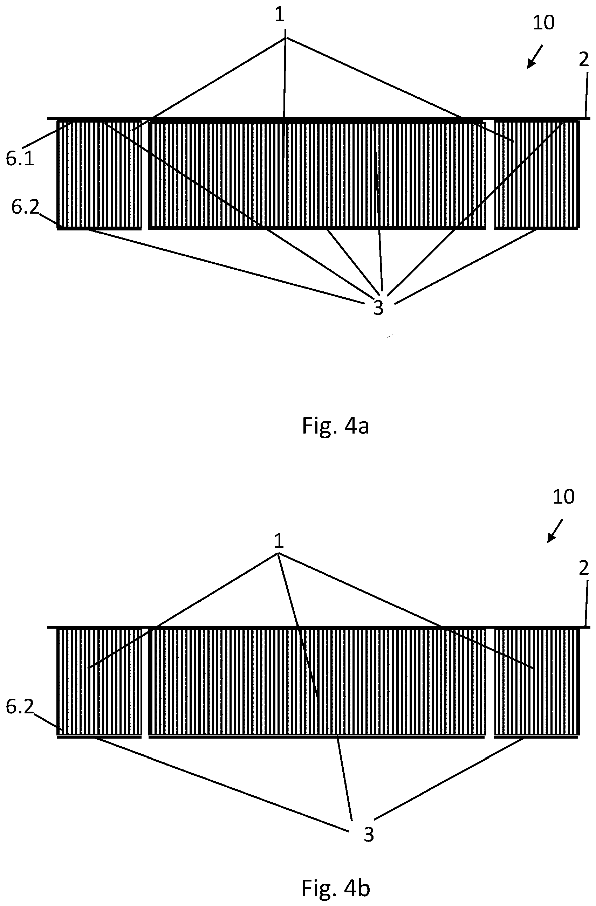

Fig. 2a zeigt einen Filter 10 in einer ersten Ansicht. Der Filter 10 besitzt drei Faltenbalge 1 aus plissiertem Filtermedium 7, wobei die Faltenbalge 1 von getrennten Luftströmen F1, F2 bzw. F3 durchströmt werden. Die Faltenbalge 1 weisen erste und zweite Seitenflächen 6.1, 6.2 auf. An ihren ersten Seitenflächen 6.1 sind die Faltenbalge 1 mit einem durchgehenden Band 2 versehen und an ihren zweiten Seitenflächen 6.2 mit einem segmentierten Kantenband 3. An ihren ersten Seitenflächen 6.1 können die Faltenbalge 1 alternativ mit einem segmentierten Kantenband 3 versehen sein, sodass drei Filterelemente vorliegen (hier nicht dargestellt, vgl. Fig. 4a). Ein jeweiliges Segment des segmentierten Kantenbandes 3 ist mit den anderen Segmenten nicht direkt verbunden und erstreckt sich nur auf die Seitenfläche 6.1, 6.2 des jeweiligen Faltenbalgs 1.

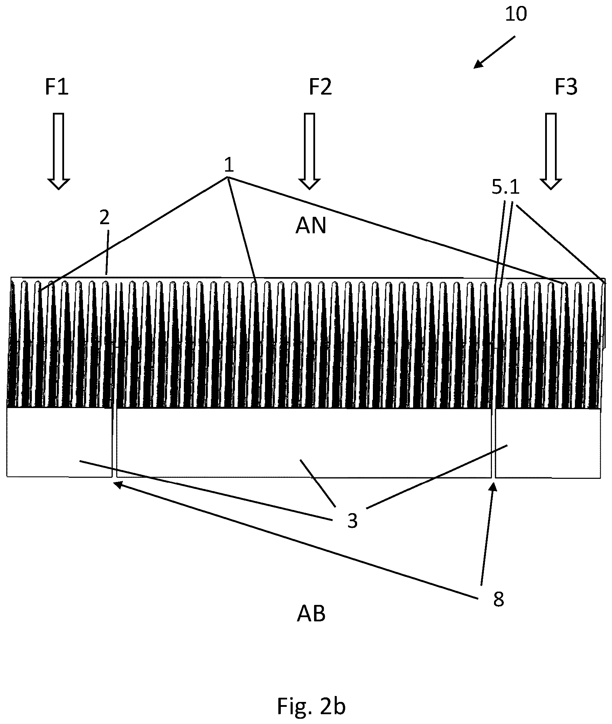

Die drei Faltenbalge 1 besitzen alle konvex nach außen gewölbte Endfalten 5. Fig. 2b zeigt einen Filter 10 in einer zweiten Ansicht. Die drei Luftströme F1, F2, F3 durchströmen den Filter von einer Anströmseite AN zu einer Abströmseite AB.

Die Kanten 5.1 des Filtermediums 7 aller Endfalten 5 sind alle zu einer Seite hin orientiert, hier nämlich der Anströmseite AN des Filters 10.

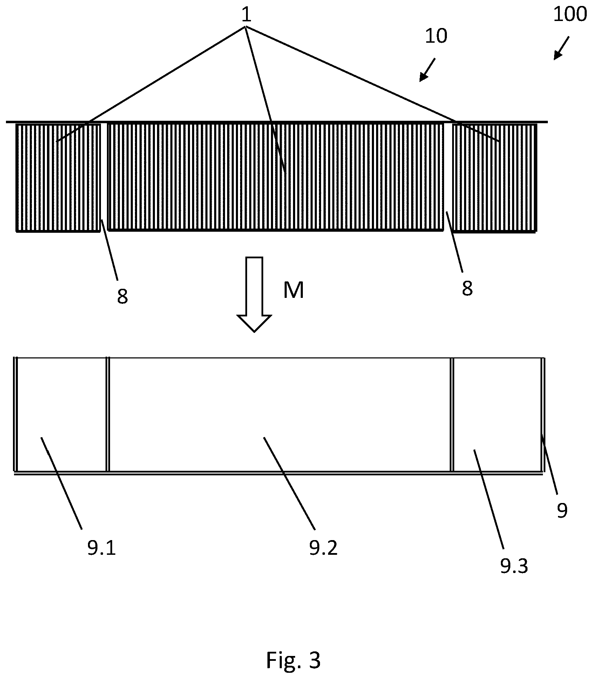

Fig. 3 zeigt eine erfindungsgemässe Filteranordnung 100 in einer grobschematischen Schnittdarstellung.

Die Filteranordnung 100 besitzt einen Filter 10 wie er in den Fig. 2a und b dargestellt ist. Dieser Filter 10 wird in einem Filtergehäuse 9 aufgenommen. Dazu kann der Filter 1 in Montagerichtung M in das Gehäuse 9 eingeführt werden. Das Filtergehäuse 9 weist drei Fächer 9.1, 9.2, 9.3 auf, welche durch Trennwände voneinander getrennt werden. Jedem Faltenbalg 1 ist dabei je ein Fach 9.1, 9.2, 9.3 zugeordnet. Die Faltenbalge 1 sind beabstandet zueinander angeordnet und es gibt zwischen je zwei Faltenbalgen 1 einen Spalt 8. **In** diese Spalte 8 können Trennwände eines Gehäuses 9 eingreifen Bei der Montage des Filters 1 in das Gehäuse 9 und beim Einschieben in Montagerichtung M greifen die beiden Wände zwischen den Fächern 9.1, 9.2, 9.3 in die beiden Spalte 8 ein. In eingebautem Zustand entspricht die Breite der Spalte 8 in etwa der Breite der Wände und die Endfalten 5 liegen jeweils an dem Gehäuse 9 an.

Fig. 4a zeigt eine Variante mit drei Filterelementen, welche einen Filter 10 bilden. Ein jeweiliges Filterelement besitzt dabei einen Faltenbalg 1, welcher an seiner ersten Seitenfläche 6.1 und an seiner zweiten Seitenfläche 6.2 jeweils mit einem segmentierten Kantenband 3 versehen ist. Das Kantenband 3 kann auf den Faltenbalg 1 aufgeklebt sein. An ihrer ersten Seitenfläche 6.1 sind die Filterelemente zusätzlich mit einem durchgehenden Band 2 versehen, welches ebenfalls aufgeklebt sein kann und die Filterelemente miteinander verbindet.

Fig. 4b zeigt eine Variante mit drei Faltenbalgen 1 welche einen Filter 10 bilden. Ein jeweiliger Faltenbalg 1 ist an seiner zweiten Seitenfläche 6.2 mit einem segmentierten Kantenband 3 versehen ist. Das Kantenband 3 kann auf den Faltenbalg 1 aufgeklebt sein. An ihren ersten Seitenflächen 6.1 sind die Faltenbalge 1 zusätzlich mit einem durchgehenden Band 2 versehen, welches ebenfalls aufgeklebt sein kann und die Faltenbalge 1 miteinander verbindet.

### Bezugszeichenliste

- 1: Faltenbalg
- 2: durchgehendes Band, z.B. Kantenband
- 2.1: Lasche
- 3: segmentiertes Kantenband
- 4: Endfalte
- 5: konvexe Endfalte
- 5.1: Kante der Endfalte
- 6.1: erste Seitenfläche des Faltenbalgs
- 6.2: zweite Seitenfläche des Faltenbalgs
- 7: Filtermedium
- 8: Spalt
- 9: Filteraufnahme (Gehäuse mit drei Fächern)
- 9.1, 9.2, 9.3: Fächer der Filteraufnahme

- 10: Filter
- 11: Faltenbalg
- 12: Kantenband
- 14: Endfalte
- 16: Seitenfläche des Faltenbalgs

- 100: Filteranordnung

- AN: Anströmseite
- AB: Abströmseite
- F1, F2, F3: Luftströme
- L: Durchströmungsrichtung
- M: Einschubrichtung bei Montage

## Patentansprüche

1. Filteranordnung (100) mit einem Filter (10) und einem Filtergehäuse (9) zur Aufnahme des Filters (10),
wobei der Filter (10) mit mindestens zwei Filterelementen mit Faltenbalgen (1) oder mit mindestens zwei Faltenbalgen (1) ausgestattet ist, wobei die Faltenbalge (1) aus plissiertem Filtermedium (7) sind und erste und zweite Seitenflächen (6.1, 6.2) aufweisen, wobei die Filterelemente oder Faltenbalge (1) an ihren ersten Seitenflächen (6.1) mit einem durchgehenden Band (2) versehen und die Faltenbalge (1) an ihren zweiten Seitenflächen (6.2) mit einem segmentierten Kantenband (3) versehen sind, wobei das segmentierte Kantenband (3) soviele Segmente aufweist, wie Faltenbalge (1) vorhanden sind und je ein Segment des segmentierten Kantenbandes (3) an der zweiten Seitenfläche (6.2) des jeweiligen Faltenbalgs (1) angebracht ist,
und wobei das Filtergehäuse (9) eine Mehrzahl von Fächern (9.1, 9.2, 9.3) besitzt, wobei jedem Faltenbalg (1) je ein Fach (9.1, 9.2, 9.3) zugeordnet ist.

2. Filteranordnung nach Anspruch 1 **dadurch gekennzeichnet, dass** die Faltenbalge (1) konvex nach außen gewölbte Endfalten (5) besitzen.

3. Filteranordnung nach Anspruch 2 **dadurch gekennzeichnet, dass** die Kanten (5.1) des Filtermediums (7) aller Endfalten (5) zu einer Seite (AN, AB) des Filters (10) hin orientiert sind.

4. Filteranordnung nach einem der vorangehenden Ansprüche **dadurch gekennzeichnet, dass** am durchgehenden Band (2) und/oder am segmentierten Kantenband (3) mindestens eine Lasche (2) angebracht ist.

5. Filteranordnung nach einem der vorangehenden Ansprüche **dadurch gekennzeichnet, dass** die Faltenbalge (1) beabstandet zueinander sind.

## Claims

1. Filter arrangement (100) having a filter (10) and having a filter housing (9) for accommodating the filter (10),
wherein the filter (10) is provided with at least two filter elements with corrugated bellows (1) or with at least two corrugated bellows (1), wherein the corrugated bellows (1) are composed of pleated filter medium (7) and have first and second side surfaces (6.1, **6.2),** wherein the filter elements or corrugated bellows (1) are provided with a continuous strip (2) on their first side surfaces (6.1) and the corrugated bellows (1) are provided with a segmented edge strip (3) on their second side surfaces (6.2), wherein the segmented edge strip (3) has as many segments as there are corrugated bellows (1) and in each case one segment of the segmented edge strip (3) is attached to the second side surface (6.2) of the respective corrugated bellows (1), and wherein the filter housing (9) has a plurality of compartments (9.1, 9.2, **9.3),** wherein each corrugated bellows (1) is assigned a respective compartment (9.1, 9.2, 9.3).

2. Filter arrangement according to Claim 1, **characterized in that** the corrugated bellows (1) have convexly outwardly curved end folds (5).

3. Filter arrangement according to Claim 2, **characterized in that** the edges (5.1) of the filter medium (7) of all the end folds (5) are oriented towards one side (AN, AB) of the filter (10).

4. Filter arrangement according to one of the preceding claims, **characterized in that** at least one tab (2) is attached to the continuous strip (2) and/or to the segmented edge strip (3).

5. Filter arrangement according to one of the preceding claims, **characterized in that**
the corrugated bellows (1) are spaced apart from one another.

## Revendications

1. Agencement de filtre (100) avec un filtre (10) et un boîtier de filtre (9) destiné à recevoir le filtre (10) ,
le filtre (10) étant équipé d'au moins deux éléments filtrants avec soufflets (1) ou d'au moins deux soufflets (1), les soufflets (1) étant composés de milieu filtrant plissé (7) et présentant des première et deuxième surfaces latérales (6.1, 6.2), les éléments filtrants ou les soufflets (1) étant pourvus d'une bande continue (2) sur leurs premières surfaces latérales (6.1) et les soufflets (1) étant pourvus d'une bande de bord segmentée (3) sur leurs deuxièmes surfaces latérales (6.2), la bande de bord segmentée (3) présentant autant de segments qu'il y a de soufflets (1) et un segment de la bande de bord segmentée (3) étant appliqué sur la deuxième surface latérale (6.2) de chaque soufflet (1), et le boîtier de filtre (9) possédant une pluralité de compartiments (9.1, 9.2, 9.3), un compartiment (9.1, 9.2, 9.3) étant associé à chaque soufflet (1).

2. Agencement de filtre selon la revendication 1, **caractérisé en ce que** les soufflets (1) possèdent des plis d'extrémité (5) bombés vers l'extérieur de manière convexe.

3. Agencement de filtre selon la revendication 2, **caractérisé en ce que** les bords (5.1) du milieu filtrant (7) de tous les plis d'extrémité (5) sont orientés vers un côté (AN, AB) du filtre (10).

4. Agencement de filtre selon l'une quelconque des revendications précédentes, **caractérisé en ce qu'**au moins une languette (2) est fixée à la bande continue (2) et/ou à la bande de bord segmentée (3).

5. Agencement de filtre selon l'une quelconque des revendications précédentes, **caractérisé en ce que** les soufflets (1) sont espacés les uns des autres.
